# EUROPEAN PATENT APPLICATION

(11) **EP 1 246 417 A2**
(43) Date of publication of application: **02.10.2002**
(21) Application number: 02251133.1
(22) Date of filing: 19.02.2002
(51) Int. Cl.: H04L 12/64

(54) **Data communication system, transmitting device, and communication terminal**

(30) Priority: 27.03.2001 JP 2001089025; 29.01.2002 JP 2002019341
(71) Applicant: Hitachi, Ltd., Chiyoda-ku, Tokyo (JP)
(72) Inventor: Shimizu, Hiroshi, c/o Hitachi, Ltd., Chiyoda-ku, Tokyo 100-8220 (JP); Someya, Ryuichi, c/o Hitachi, Ltd., Chiyoda-ku, Tokyo 100-8220 (JP)
(74) Representative: Calderbank, Thomas Roger

(57) **Abstract**

A data communication system (1, 2) includes a transmitting device (1) having a unit (13) for storing a plurality of data, a unit (11) for receiving a request to transmit first data from the communication terminal (2), and for transmitting the first data to the communication terminal (2) in response to the request for transmission; and a communication terminal (2) having a unit (21) for transmitting the request to transmit the first data to the transmitting device (1), a data receiving unit (21) for receiving the first data, a first storage (23) for storing the first data, a second storage (26) for storing second data different from the first data, a reading unit (24) for reading data storage (26), a display unit (25) for stored in the first storage (23) or second displaying the data read out by the reading unit (24), and a control unit (22) for performing control for the reading unit (24).

## Description

The present invention relates to a wireless data communication system. More specifically, the invention relates to a system for transmitting vast amounts of high-speed moving image data in real time.

Conventionally, in order to distribute moving images via a network, a method of downloading sampled images through inter-PC communication or the Internet is employed. In this method, each of the sampled images has a short duration of one to two minutes. Alternatively, in the Internet, a method of distributing moving images using a high-compression technology such as an MPEG 4 is employed.

Further, NTT DoCoMo, Inc. launched image distribution service, which is called "DoCoMo M-stage visual video content distribution service", in 2001. In this service, 64-Kbps wireless data communication channels are used for PHSs. Then, moving image distribution service through "streaming reproduction" is performed. In the "streaming reproduction", various contents of moving images are downloaded into a terminal called an "eggy" that can perform MPEG4 reproduction, and reproduction is started before downloading is not completed. "M-stage visual" and "eggy" are both trademarks of NTT DoCoMo, Inc.

However, moving image data is vast in amount. For this reason, even with a transmission speed of 64 Kbps, only highly-compressed, low-quality MPEG 4 moving images can be transmitted, so that it was difficult to view high-quality moving images on demand in a mobile environment.

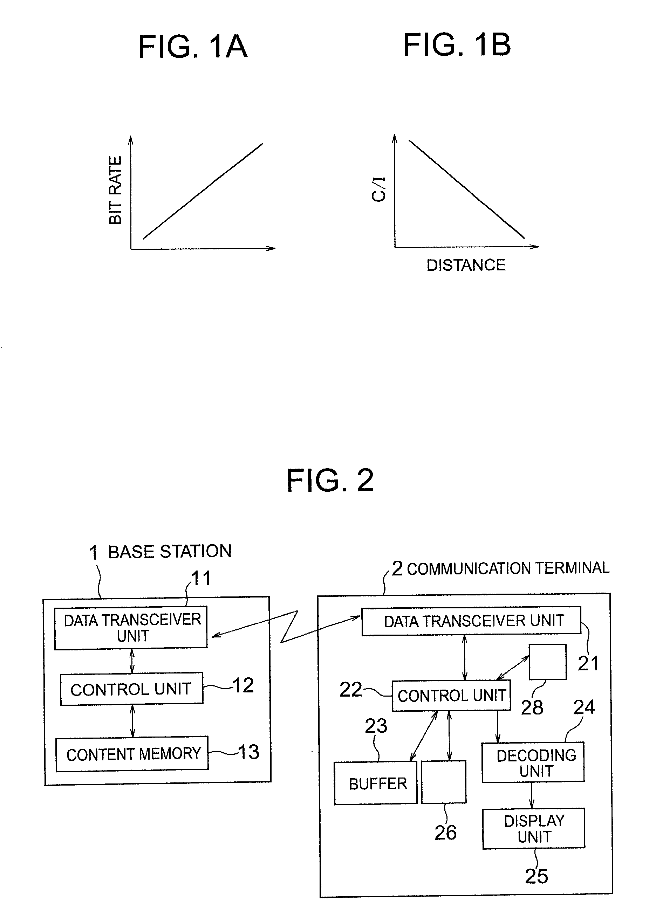

A technique of performing data communications at a maximum transmission speed of 2.4 Mbps, or an average transmission speed of approximately 600 kbps using a spread spectrum system has been developed. Figs. 1A and 1B are graphs showing a relationship between a bit rate of a communication terminal, a C/I (Carrier to Interference Power Ratio), and a distance in this system. Fig. 1A shows the relationship between the bit rate and the C/I. The less interference relative to a carrier, the higher bit rate is assigned. Fig. 1B is the graph showing the relationship between the C/I and the distance between a terminal and a base station. It can be seen from the graph that the greater the distance, the less the C/I becomes. In other words, in this system, data transfer from a base station to a nearby terminal is performed at a high bit rate, while data transfer from the base station to a far-off terminal is performed at a low bit rate.

As described above, when the spread spectrum technique is employed, a data transfer rate varies according to the location of a terminal. Consequently, the problem arises that the data transfer rate is reduced during streaming reproduction, thereby leading to an interruption of the reproduction. When vast amounts of data such as moving image data is reproduced through streaming reproduction as well as through the spread spectrum technique, the following situation might occur. That is, downloading cannot be performed in time for data reproduction due to a reduction in the transmission speed or an interruption of data transmission, so that reproduction is stopped.

Thus it is desirable that the present invention may provide a data communication system and a communication terminal in which data can be browsed even if a reduction in a data transfer rate or an interruption of data transfer has occurred during streaming reproduction.

In order to address this, the data communication system according to the present invention comprises a transmitting device and a communication terminal. The transmitting device comprises data storage unit for storing a plurality of data, receiving unit for receiving a request to transmit first data from the communication terminal, selecting unit for selecting the first data from the data storage unit in response to the request for transmission, and transmitting unit for transmitting the first data to the communication terminal. The communication terminal comprises request transmitting unit for sending a request to transmit the first data to the transmitting device, data receiving unit for receiving the first data transmitted from the transmitting device, first storage unit for storing the first data received by the data receiving unit, second storage unit for storing second data different from the first data, reading unit for reading out data stored in the first or second storage unit, display unit for displaying the data read out by the reading unit, and control unit for performing control such that the reading unit reads out the data from the first or second storage unit according to the amount of the first data stored in the first storage unit.

Other objects, features and advantages of the invention will become apparent from the following description of the embodiments of the invention taken in conjunction with the accompanying drawings.

### IN THE DRAWINGS

Figs. 1A and 1B are graphs showing a relationship between a bit rate of a communication terminal, a distance, and a Carrier to Interference Power Ratio in a spread spectrum system;
Fig. 2 is a block diagram showing the configuration of a data communication system according to an embodiment of the present invention;
Fig. 3 is a timing diagram showing a relationship between a data storage capacity of a buffer 23 and a moving image reproduction status according to the embodiment of the present invention;
Fig. 4 is a timing diagram showing a method of transmitting still image data and a still image insertion status according to the embodiment of the present invention;
Fig. 5 is a timing diagram showing another method of transmitting still image data and a still image data insertion status according to an embodiment of the present invention;
Fig. 6 is an explanatory diagram showing a method of transmitting still image data such as a commercial according to an embodiment of the present invention;
Figs. 7A and 7B are illustrative diagrams explaining methods of specifying positions of inserting a video image such as the commercial into reproduced moving images in the data communication system according to the embodiment of the present invention;
Fig. 8 is a timing diagram showing states where index-points are used to insert a commercial in the data communication system according to the embodiment of the present invention;
Fig. 9 is an illustrative diagram explaining a method of inhibiting insertion of an image such as the commercial into a reproduced moving image in the data communication system according to the embodiment of the present invention;
Fig. 10 is a block diagram showing the configuration of a data communication system according to an embodiment of the present invention;
Fig. 11 is a table showing a correspondence between the number of times that a commercial has been broadcast and bonus information;
Fig. 12 is a table showing a correspondence between the number of times that a commercial has been broadcast and bonus information;
Fig. 13 shows flows of money charged for viewing moving image contents and commercial insertion in the data communication system according to the present invention;
Fig. 14 is a table showing a relationship between a commercial supplier, a type of commercials, and a sponsor fee;
Figs. 15A, 15B, and 15C are illustrative diagrams showing a first example of display in a communication terminal according to the present invention; and
Figs. 16A, 16B, and 16C are illustrative diagrams showing a second example of display in the communication terminal according to the present invention.

Now, embodiments of the present invention will be described with reference to the accompanying drawings.

Fig. 2 shows a configuration of a data communication system according to the present invention. Reference numeral 1 denotes a base station for conducting wireless data communications, and reference numeral 2 denotes a communication terminal for carrying out communications with this base station. The base station 1 has a data transceiver unit 11 for transmitting data to and receiving data from the communication terminal 2, a control unit 12, and a content memory 13. The communication terminal 2 has a transceiver unit 21 for carrying out data communications with the data transceiver unit 11, a control unit 22, a buffer 23, a decoding unit 24, a display unit 25, and an insertion data buffer 26. The communication terminal 2 further has an operator unit 28 to which a user performs command input or whereby the user selects an operation. Incidentally, the communication terminal 2 may be mounted on an automobile, or may be a portable terminal that can be carried.

The base station 1 receives a request from the communication terminal 2 at the data transceiver unit 11. In response to the request, the control unit 12 extracts desired moving image data from the content memory. The extracted moving image data is transmitted to the communication terminal 2 via the data transceiver unit 11. The moving image data received at the transceiver unit 21 is stored in the buffer 23. The decoding unit 24 decodes the moving image data that has been read out from the buffer 23 under the control of the control unit 22, and supplies the decoded moving image data to the display unit 25.

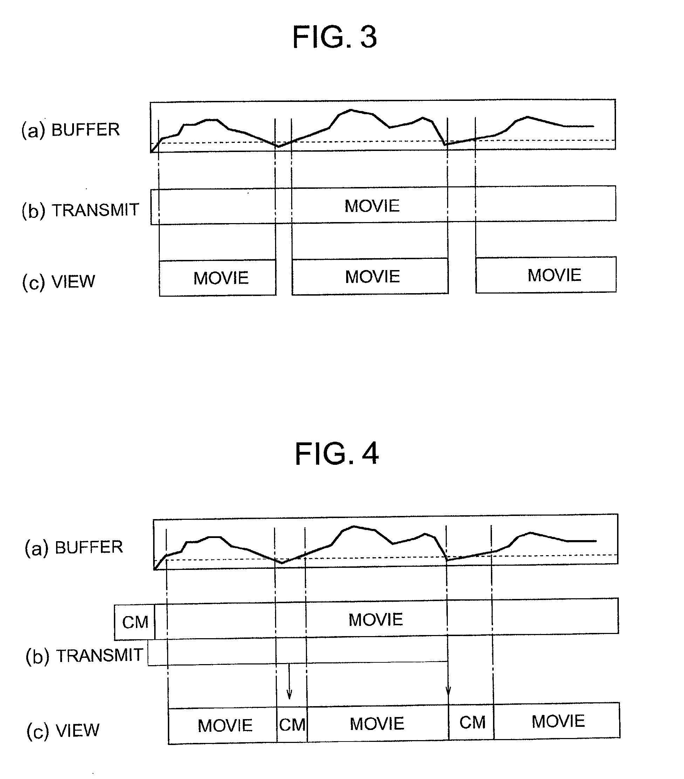

Fig. 3 is a timing diagram showing a relationship between the amount of data in the buffer 23 and a reproduction status of moving image data. Fig. 3, indicated by (a)Buffer shows the amount of moving image data stored in the buffer 23. Fig. 3, indicated by (b)Transmit shows moving image data transmitted from the data transceiver 11. In this embodiment, moving images are assumed to be movies. Fig. 3, indicated by (c) View shows a reproduction status of the movie displayed on the display unit 25.

When a bit rate is sufficiently high, data can be received at a transmission speed equal to or more than the reproduction speed of moving images. Consequently, data accumulates in the buffer 23. A horizontal axis indicated by a dot line is a threshold. In this embodiment, the control unit 22 performs control such that reproduction cannot be started until the amount of data accumulated in the buffer unit 23 exceeds this threshold value. Storing the amount of data that exceeds the threshold value in the buffer unit 23 to start reproduction in this way can prevent data reproduction being interrupted whenever a reduction in the bit rate in a short period of time or an interruption of data transmission has occurred.

In this embodiment, when a reduction in the bit rate continues, and the amount of data stored in the buffer 23 becomes small, reproduction of moving images is stopped, as shown in Fig. 3 indicated by (c) View. Then, during the intervals that reproduction of the moving images is stopped, still images associated with commercial images or the moving images are inserted. Specifically, as shown in Fig. 4, still image data of a commercial image or data on a still image that suits the preferences of the user is transmitted together with moving image data. The still image data is stored in the insertion data buffer 26. Then, when the amount of moving image data stored in the buffer 23 becomes small, the control unit 22 performs control so that upon stopping of reproduction of moving images, the decoder unit 24 decodes the still image data. During the interval that moving image reproduction is stopped, data is stored and accumulated in the buffer 23. Then, upon accumulation of the amount of data that exceeds the threshold value, moving image reproduction is resumed.

With this arrangement, as shown in Fig. 4 indicated by (c)View, when moving image reproduction has stopped, a user can automatically view other images until the moving image reproduction is resumed. If inserted data is a commercial, an advertising effect resulting from broadcasting of the commercial can be included in the cost of moving image distribution, thereby reducing a distribution charge for the user. In this case, the cost required for downloading the commercial is charged to the sponsor of the commercial.

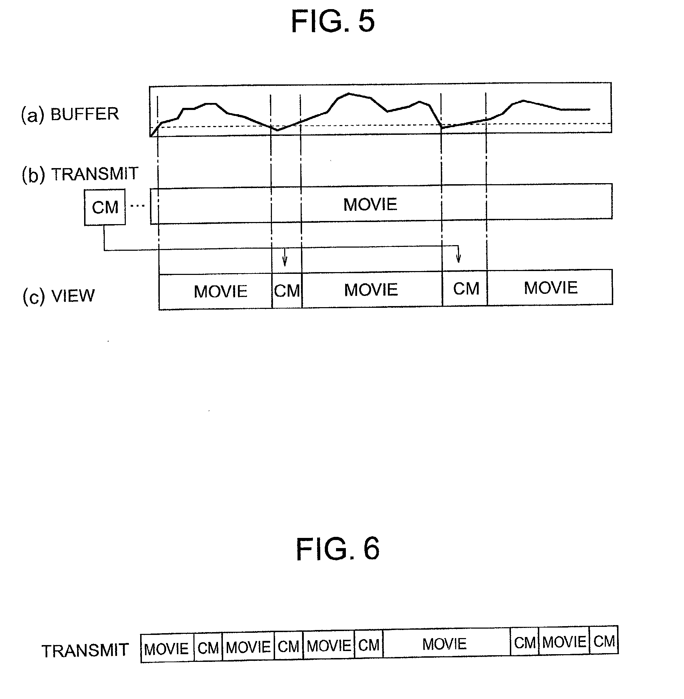

Incidentally, before downloading of desired content is started, this still image data including a commercial may be automatically downloaded with appropriate timing such as when a bit rate is high, for example, as shown in Fig. 5. Then, the still image data may be stored in advance in the insertion data buffer 26. According to this method, since insertion data is stored in advance, the time between the start of downloading of contents of data and reproduction of moving image data can be reduced.

Alternatively, when the amount of image data stored in the buffer 23 has become small, request information requesting still image data may be transmitted from the communication terminal 2. The data amount of still image data is smaller than the data amount of moving image data, so that even if the bit rate is low, the still image data can be downloaded. Thus, when transmission at the low bit rate continues, the base station 1 may insert still image data into moving image data for transmission. According to this method, new still images can be downloaded, so that most recent data can be provided for the user whenever interruption of moving image reproduction occurs. Whenever moving image data reproduction has interrupted, information on most recent news, weather forecasts, and stocks, for example, can be reproduced. According to this method, still image data is downloaded when image data stored in the buffer 23 becomes small. Thus, the still image data may also be temporarily stored in the buffer 23. With this arrangement, the buffer 23 can serve as the insertion data buffer as well.

Alternatively, as shown in Fig. 6, still image data such as a commercial may be inserted at predetermined intervals, for transmission, irrespective of whether the bit rate is low or high. Then the transmitted commercial is temporarily stored in the insertion data buffer 26 one by one, and reproduced whenever moving image reproduction is stopped.

The images of commercials to be inserted are not limited to still images. They may also be moving images with a small data amount.

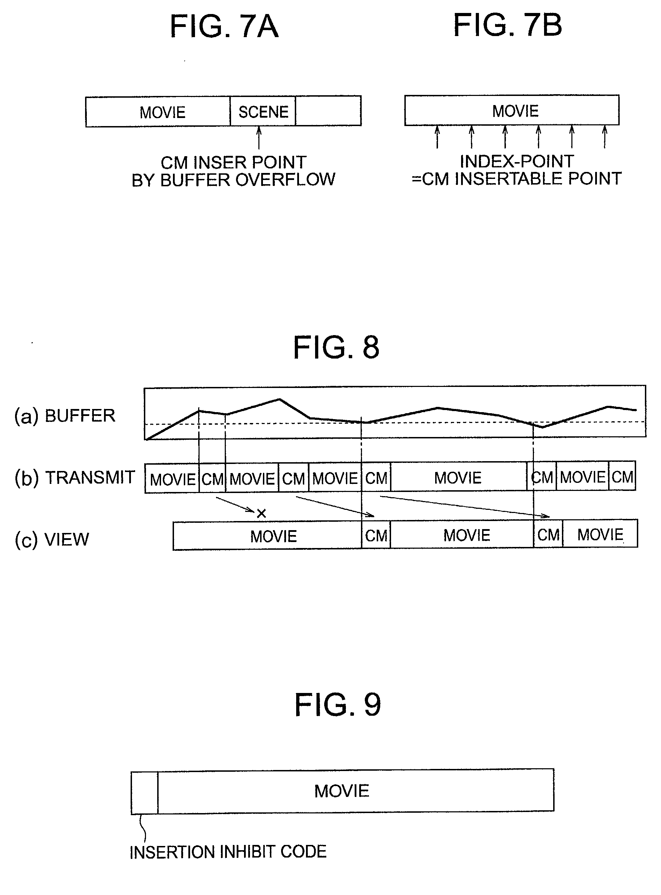

A method of specifying a position at which an images such as a commercial is inserted into a reproduced moving image in the data communication system according to the embodiment of the present invention will be described with reference to Figs. 7A and 7B.

As shown in Fig. 7A, moving image content includes a plurality of "scenes" or "cuts" a succession of which develops a single subject. For this reason, if a reproduction stop position is determined from only the remainder of the amount of data in the buffer 23, a commercial suddenly appears at some midpoint in a scene. Insertion of the commercial at some midpoint in the scene in this manner cause all the more increased discomfort to a viewer. Then, in this embodiment, as shown in Fig. 7B, inserting position locating signals called Index-Points are provided for moving image content transmitted from the base station 1, and a commercial is inserted into the positions of the Index-points.

Fig. 8 is a timing diagram showing the states where a commercial is inserted by using the capacity of the buffer 23 and Index-Points contained in moving image content. In this embodiment, the commercial is inserted into the positions of the Index-Points shown in Fig. 7B in advance, and then the moving image content is downloaded. When the buffer 23 has a sufficient capacity, the commercial is not reproduced, and temporarily stored in the insertion data buffer 26. Then, even if the amount of storage in the buffer 23 has become small, reproduction of the commercial is not immediately started; at the immediately following Index-Point, reproduction of the commercial is started.

As described above, the positions at which a commercial is inserted are defined on the basis of the amount of storage in the buffer 23 and the Index-Points. With this arrangement, insertion of a commercial at some midpoint of a scene can be prevented. Viewer discomfort can be thereby relaxed.

In the embodiment shown in Fig. 8, though the commercial is inserted into the moving image content for downloading, the invention is not limited to this arrangement. Index-Points alone may be contained in the moving image content as shown in Fig. 7B. Then, as in the embodiment shown in Fig. 4 or Fig. 5, a commercial that has been downloaded before downloading of moving image content may be reproduced. Alternatively, a commercial that has been downloaded in response to a request from the communication terminal 2, may be reproduced, if necessary. Still alternatively, several types of commercials are downloaded in advance, and different commercials may be reproduced. Thus, even if it takes much time to store and accumulate moving image data in the buffer 23, this arrangement can prevent viewers from being fed up with viewing the same commercial.

In this embodiment, an Index-Point is contained in the moving image content. On the basis of this signal, the position into which the commercial can be inserted is detected. However, the present invention is not limited to commercial insertable point detection by the use of Index-Points. Commercial insertbale point detection may also be performed by using a substantial change in data due to a blackout or no sound. According to this method, even when no commercial insertable position information is not contained in moving image content transferred from the base station, insertion of a commercial at some midpoint in a scene can be prevented.

Alternatively, the user may select whether insertion of an image such as a commercial is permitted or not by the use of the operator unit 28, as shown in Fig. 2. Selection by the user as to image insertion using the operator unit 28 can prevent insertion of other image into moving image content against the will of the user. Alternatively, as shown in Fig. 9, an insertion-inhibit code indicating whether to inhibit insertion of an image such as a commercial into moving image content may be added for transmission. Addition of the insertion-inhibit code to moving image content transmitted from the base station 1 to the communication terminal 2 can prevent insertion of other image into the moving image content against the will of the author of the moving image content.

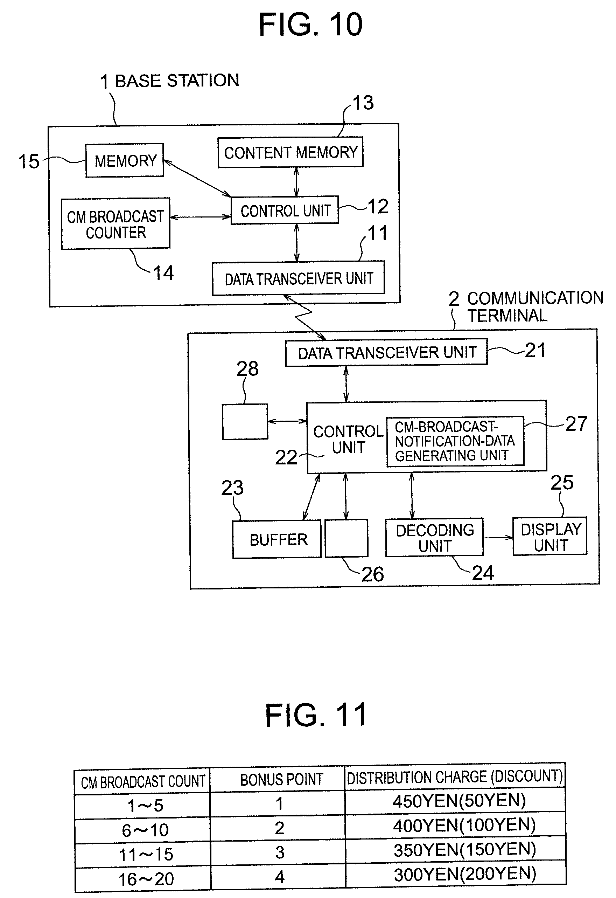

Next, with reference to Fig. 10, a description will be directed to a data communication system in which, when a commercial is broadcast, a charge for distribution service can be discounted, or a predetermined bonus point can be acquired according to the number of times the commercial has been broadcast. For the components that are the same as those illustrated in Fig. 2, their descriptions will be omitted. Incidentally, the already-described method of inserting a commercial can be applied to this data communication system.

Referring to Fig. 10, reference numeral 14 denotes a commercial broadcast counter, reference numeral 15 denotes a memory, and reference numeral 27 denotes a CM-broadcast-notification data generating unit. The number of times a commercial has been broadcast and corresponding bonus information data such as a bonus point and a discount are recorded in the memory 15.

When a commercial read out from the insertion data buffer 26 is decoded by the decoding unit 24, and then the decoded information is transmitted to the control unit 22, the CM-broadcast-notification-data generating unit 27 generates data for notifying the broadcast of the commercial. This data is transmitted to the commercial broadcast counter 14 via the data transceiver unit 11 and the control unit 12. Then, the CM broadcast counter 14 counts the number of times that the commercial has been broadcast. The control unit 12 calculates the bonus point to be given to a viewer or a distribution charge, on the basis of the result of counting and the data stored in the memory 15. The result of calculation is transmitted to the communication terminal 2 for each completion of reproduction of moving image content. Alternatively, the results of calculation are summed up for a predetermined period, and then notified to the viewer.

As described above, the bonus point is given for the viewer according to the number of times a commercial has been broadcast. With this arrangement, even if an interruption has occurred during reproduction of moving image content, user discomfort can be relaxed.

In the data communication system in Fig. 10, the number of times a commercial has been broadcast is counted at the base station 1, on the basis of data transmitted from the communication terminal 2. The invention, however, is not limited to this. It may also be so arranged that the number of times a commercial has been broadcast is counted at the communication terminal 2, and the total of the results of counting is transmitted to the base station 1. Alternatively, in order to ensure more accuracy, the number of times of broadcasting may be counted at both of the base station 1 and the communication terminal 2, and the results of counting may be compared each other.

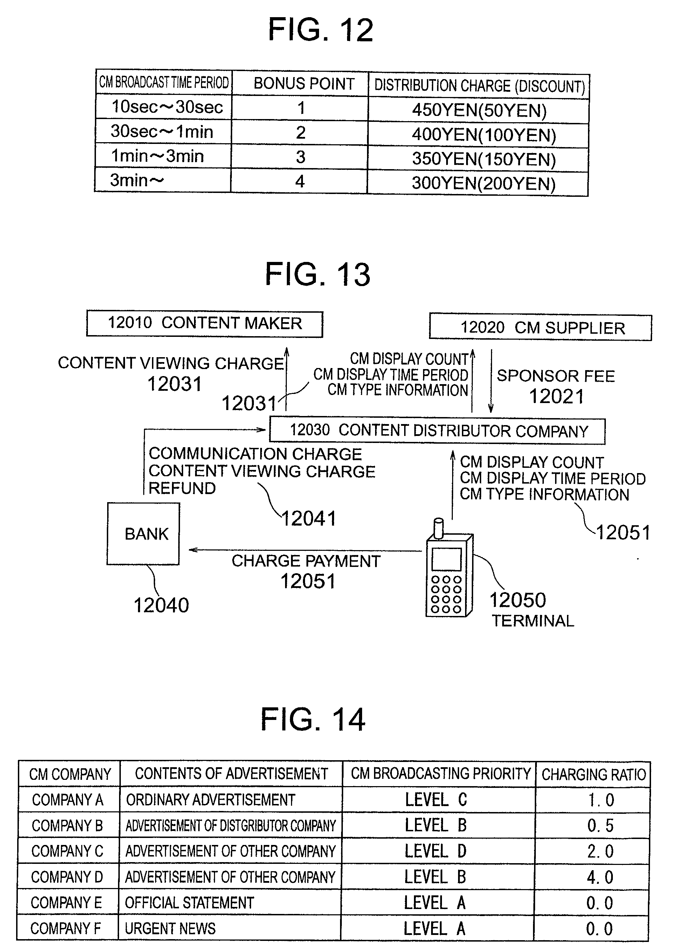

Even if a commercial is inserted the same number of times during reproduction of moving image content, user discomfort and the effect of advertisement would greatly differ, depending on the period of time during which the commercial is broadcast. For this reason, it is preferable that a broadcast time period is used to calculate the bonus point, as shown in Fig. 12. Further, in stead of calculating the distribution charge discontinuously as shown in Figs. 11 and 12, a discount on the distribution charge may also be changed linearly on the basis of the broadcast time period of the commercial.

Fig. 13 shows flows of money when commercial insertion has occurred during browsing of moving image data in the data communication system according to the embodiment of the present invention.

A communication terminal 12050, in place of a subscriber, pays to a bank a charge for browsing the moving image content, as shown in a money flow 12051. Then, the bank pays a communication charge and a charge for viewing the moving image content, to a content distributor company 12030. Then, the content distributor company pays a content viewing charge 12031 to a content maker 12010. When insertion of a commercial occurs due to a reduced communication rate at this point, the communication terminal 12050 notifies the content distributor company of various information such as the number of times that the commercial has been displayed, a display period of time of the commercial, and the type of the commercial, as shown in a money flow 12052. The content distributor company notifies a commercial supplier 12020 of the number of times the commercial has been reproduced, the display period of time of the commercial, and the type of the commercial, as shown in a money flow 12032. The commercial supplier 12020 pays a sponsor fee associated with the number of times that the commercial has been reproduced and the like. The content distributor company discounts from the sponsor fee a charge not shown, such as a commercial distribution charge, damages arising out of faulty distribution of moving image content, and refunds the remainder to the communication terminal 12050 via the bank 12040. Specifically, the payment from the communication terminal 12050 is discounted for refunding.

Fig. 14 is a table that shows a relationship between the type of a commercial distributed by the commercial supplier and the sponsor fee. As shown in the table, the contents of a commercial, a broadcasting priority, and the sponsor fee are set. In regard to the broadcasting priority, a level A is given the highest priority, while a level D is given the lowest priority. The amount of the sponsor fee is set according to a charging ratio that is a proportion with regard to a base price. For example, ordinary advertisements are set to be given a C-level broadcasting priority and the charging ratio of 1.0, which is equivalent to the base price, and the advertisement of the content distributor company is set to be given a B-level broadcasting priority and the charging ratio of 0.5. The commercial of a company C that does not make a contract for broadcasting a commercial regularly but has made a contract for performing spot broadcasts of the commercial is given a low broadcasting priority and a high charging ratio. However, a company D with the high charging ratio that has made the same contract for performing spot broadcasts as the company C, is set to be given the broadcasting priority higher than the broadcasting priority of the company C. The highly public information represented by official statements and urgent information can be set to be given the higher broadcasting priority and can also be set such that the sponsor fee is free or low.

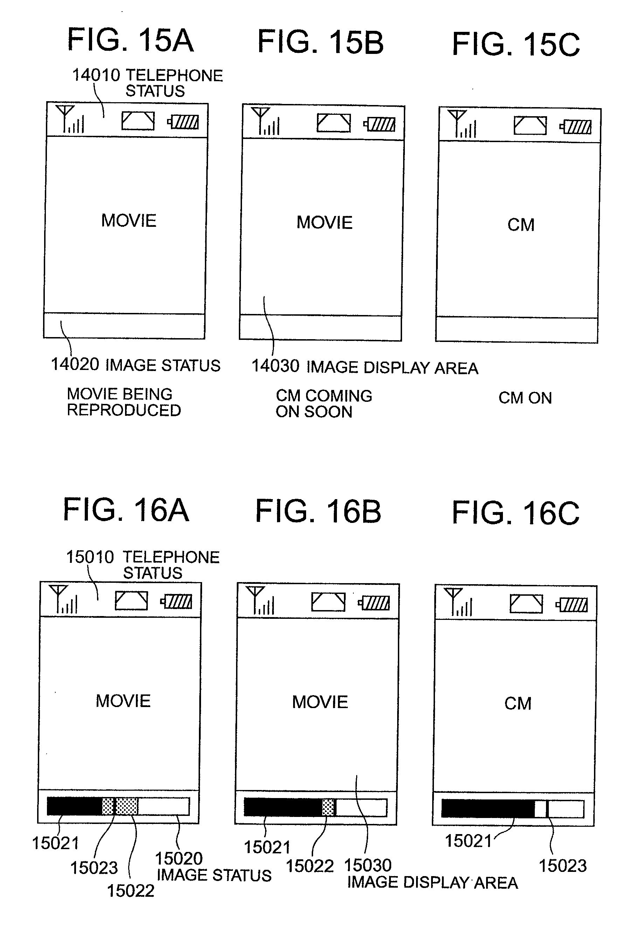

Figs. 15A, 15B, and 15C are illustrative diagrams showing displays of a communication terminal used in the data communication system according to the present invention. In this embodiment, display is performed that indicates whether moving image content or other data such as a commercial is being reproduced.

Fig. 15A shows a screen when moving image content is being reproduced in a good communication environment. At the top of the screen, a telephone status 14010 indicating the status of the terminal as a telephone displays icons that represent a emission status, a presence or absence of the arrival of an E-mail, and a battery indication. On an image display area 14030, a movie is being reproduced. At this point, an image status 14020 at the bottom of the screen displays a message stating "Movie is being reproduced." which shows that the moving image content is normally being reproduced. Fig. 15B shows a screen when the remainder of the storage capacity of the buffer shown in Fig. 3 has become equal to or less than a predefined capacity. The image status 14020 displays a message stating "Commercial will come on the air soon." Fig. 15C shows the state after the broadcast of the commercial was started. The image display area 14030 displays the commercial, and the image status 14020 displays a message stating "Commercial is now on the air."

When the moving image content on the screen is suddenly switched to other image such as a commercial, the user would be surprised. Especially when moving image data is used as insertion data, the user does not distinguish whether the image he is viewing is a commercial or moving image content, so that he would get confused. According to this embodiment, the user can be notified of a switchover of display to a commercial and reproduction of the commercial. Further, display of the message before the start of reproduction of a commercial can give the user an opportunity to choose whether to insert the commercial or not through the operator unit 28.

Figs. 16A, 16B, and 16C are illustrative diagrams showing other displays. An entire bar graph shows the overall amount of moving image content. Reference numeral 15021 denotes the amount of moving image content that has been already reproduced, while reference numeral 15022 denotes the amount of moving image content that has already been stored in the buffer 23. Reference numeral 15023 denotes a threshold that indicates whether moving image reproduction is possible or not. Fig. 16A shows a state where the amount 15022 of the moving image content stored in the buffer 23 is sufficient, while Fig. 16B shows a state where the amount 15022 of the moving image content stored in the buffer 23 has become smaller. Fig. 16C shows a state where the amount of the moving image content stored is smaller than the threshold, so that reproduction of the moving image content cannot be performed.

Display of the amount 15022 of the moving image content stored in the buffer and the amount 15021 of the moving image contents reproduced, as in this embodiment, can notify the user of a possibility that reproduction of the moving image content may be interrupted before completion of reproduction.
Further, by viewing a change in the amount 15022 of the moving image content stored, the user can be informed of the approximate time when reproduction of the moving image content will be resumed.

For display of respective states of the moving image content amount 15021, different colors can be employed. In this case, it may be so arranged that a green color is used for the state in Fig. 16A, a yellow color is used for the state in Fig. 16B, and a red color is used for the state in Fig. 16C, for example. Display by using different colors in this way can clearly notify the user of a change in the state of content reproduction. That is, the user can be informed of whether reproduction is being properly performed or reproduction of a commercial is coming on the air soon.

The display methods of distinguishing whether a moving image being reproduced is a commercial or moving image content and displaying a switchover to a commercial were shown with reference to Figs. 15A, 15B, and 15C and Figs. 16A, 16B, and 16C. The invention is not limited to these display methods. By displaying simplified icons on part of the telephone status 14010, illumination of LEDs, or a change in the colors of LEDs as well, the same effect can be obtained. Further, a combination of the display methods described above can improve the degree of recognition of the user. Further, by setting the display method according to the selection of the user, the display method can be made to be the one readily recognized by the user. This arrangement can improve the operability of the communication terminal.

In the embodiments described above, streaming reproduction of moving image data was described. The present invention, however, is not limited to transmission of moving image data, and can also be applied to continuous transmission of still pictures.

According to the present invention, a data communication system and a communication terminal can be provided where data can be browsed even if a reduction in a data transfer rate and an interruption has occurred during streaming reproduction.

It should be further understood by those skilled in the art that the foregoing description has been made on embodiments of the invention and that various changes and modifications may be made in the invention without departing from the spirit of the invention and the scope of the appended claims.

## Claims

1. A data communication system (1, 2) for transmitting and receiving data between a transmitting device (1) and a communication terminal (2), wherein
the transmitting device (1) comprises:
a data memory (13) for storing a plurality of data;
a receiving unit (11) for receiving a request to transmit first data from the communication terminal (2);
a selecting unit (12) for selecting the first data from the data memory (13) in response to the request for transmission; and
a transmitting unit (11) for transmitting the first data to the communication terminal (2);
and wherein
the communication terminal (2) comprises:
a request transmitting unit (21) for transmitting a request to send the first data to the transmitting device (1) ;
a data receiving unit (21) for receiving the first data transmitted from the transmitting device (1) ;
a first storage (23) for storing the first data received by the data receiving unit (21);
a second storage (26) for storing second data different from the first data;
a reading unit (24) for reading out data stored in the first storage (23) or second storage (26) ;
a display unit (25) for displaying the data read out by the reading unit (24); and
a control unit (22) for performing control such that the data from the first storage (23) or second storage (26) is read out according to an amount of the first data stored in the first storage (23).

2. A data communication system (1, 2) for transmitting and receiving data, including:
a transmitting device (1) for transmitting first data; and
a communication terminal (2) including:
a receiving unit (21) for receiving the first data transmitted from the transmitting device (1) ;
a first storage (23) for storing the first data received by the receiving unit (21);
a second storage (26) for storing second data different from the first data;
a reading unit (24) for reading out data stored in the first storage (23) or second storage (26) ;
a display unit (25) for displaying the data read out by the reading unit (24);
a measuring unit (22) for measuring an amount of the first data stored in the first storage (23); and
a control unit (22) for performing control such that the reading unit (24) reads out data from the first storage (23) or second storage (26).

3. A data communication system (1, 2) for transmitting and receiving data between a transmitting device (1) and a communication terminal (2), wherein
the transmitting device (1) comprises:
a data memory (13) for storing a plurality of data;
a receiving unit (11) for receiving a request to transmit first data from the communication terminal (2);
a selecting unit (12) for selecting the first data from the data memory (13) in response to the request for transmission; and
a transmitting unit (11) for transmitting the first data to the communication terminal (2);
and wherein
the communication terminal (2) comprises:
a request transmitting unit (21) for transmitting a request to send the first data to the transmitting device (1) ;
a data receiving unit (21) for receiving the first data transmitted from the transmitting device (1);
a first storage (23) for storing the first data received by the data receiving unit (21);
a second storage (26) for storing second data different from the first data;
a reading unit (24) for reading out data stored in the first storage (23) or second storage (26);
a display unit (25) for displaying the data read out by the reading unit (24); and
a control unit (22) for performing control over the reading unit (24) such that, when an amount of the first data is less than a predetermined amount, the second data is read out from the second storage (26).

4. The data communication system (1, 2) according to claim 1, wherein the first data is moving image data, and the second data is commercial message data.

5. The data communication system (1, 2) according to claim 1, wherein the first data has positional data indicating a position into which the second data can be inserted.

6. The data communication system (1, 2) according to claim 1, where the second data is transmitted by the transmitting device (1).

7. The data communication system (1, 2) according to claim 6, wherein the communication terminal (2) transmits a request to transmit the second data from the request transmitting unit (21) to the transmitting device (1) according to the amount of the first data stored in the first storage (23).

8. The data communication system (1, 2) according to claim 1, wherein the transmitting device (1) comprises a bonus information storage for storing bonus information associated with a number of times that the reading unit (24) has read out the second data from the second storage (26) or a period of time required for the reading unit (24) to read out the second data from the second storage (26).

9. The data communication system (1, 2) according to claim 8, wherein the bonus information is information on a discount on a data transmission charge or bonus point information.

10. The data communication system (1, 2) according to claim 1, wherein when the first data contains inhibit data for inhibiting insertion of the second data into the first data, the control unit (22) performs control over the reading unit (24) such that reading of the second data is stopped.

11. The data communication system (1, 2) according to claim 1, wherein the communication terminal (2) further comprises a selecting unit (28) for selecting whether reading of the second data is permitted or not.

12. A transmitting device (1) for transmitting data to a communication terminal (2) comprising:
storage means (13) for storing a plurality of data;
receiving means (11) for receiving a request to transmit first data from the communication terminal (2);
reading means (12) for reading out the first data from the storage means (13); and
transmitting means (11) for transmitting the first data and inhibit data that inhibits insertion of second data different from the first data into the first data.

13. A communication terminal (2) for transmitting data to and receiving data from a transmitting device (1), the communication terminal (2) comprising:
a request transmitting unit (21) for transmitting a request to transmit first data to the transmitting device (1) ;
a data receiving unit (21) for receiving the first data transmitted from the transmitting device (1);
a first storage (23) for storing the first data received by the data receiving unit (21);
a second storage (26) for storing second data different from the first data;
a reading unit (24) for reading out data stored in the first storage (23) or the second storage (26);
a display unit (25) for displaying the data read out by the reading unit (24); and
a control unit (22) for performing control such that the reading unit (24) reads out the data from the first storage (23) or the second storage according to an amount of the first data stored in the first storage (23).

14. The communication terminal (2) according to claim 13, wherein the first data is moving image data, and the second data is commercial message data.

15. The communication terminal (2) according to claim 13, wherein the first data contains positional data indicating a position into which the second data can be inserted.

16. The communication terminal (2) according to claim 13, wherein the second data is transmitted by the transmitting device (1).

17. The communication terminal (2) according to claim 16, wherein the communication terminal (2) transmits a request to transmit the second data from the request transmitting unit (21) to the transmitting device (1) according to the amount of the first data stored in the first storage.

18. The communication terminal (2) according to claim 13, wherein when the first data contains inhibit data that inhibits insertion of the second data into the first data, the control unit (22) performs control over the reading unit (24) such that reading of the second data is stopped.

19. The communication terminal (2) according to claim 13, wherein the communication terminal (2) further comprises a selecting unit (28) for selecting whether to read out the second data or not.

20. The communication terminal (2) according to claim 13, wherein the display unit (25) displays the amount of the first data stored in the first storage (23).

21. The communication terminal (2) according to claim 13, wherein when the display unit (25) displays the second data, display indicating that the second data is being displayed is performed.

22. The communication terminal (2) according to claim 13, wherein the display unit (25) includes a notification unit (27) for notifying display of the second data.

23. A method of reproducing a plurality of data, comprising the steps of:
receiving first data transmitted from a transmitting device (1);
storing the received first data in a memory (23);
reproducing first data from the memory (23);
notifying reproduction of second data different from the first data when an amount of the first data stored in the memory (23) becomes small; and
selecting whether to allow reproduction of the second data or not;
wherein when permission to reproduce the second data is selected, reproduction of the first data is stopped, and then reproduction of the second data is started.
